# EUROPEAN PATENT SPECIFICATION

(11) **EP 1 166 508 B1**
(45) Date of publication and mention of the grant of the patent: **19.01.2011**
(21) Application number: 00921276.2
(22) Date of filing: 31.03.2000
(51) Int. Cl.: H04W 88/08

(54) **WIRELESS NETWORK AND ROUTING PROCEDURES**
DRAHTLOSES NETZWERK UND ROUTINGSVERFAHREN
RESEAU SANS FIL ET PROCEDURES D'ACHEMINEMENT ASSOCIEES

(30) Priority: 07.04.1999 SE 9901251
(43) Date of publication of application: 02.01.2002
(73) Proprietor: Telefonaktiebolaget LM Ericsson (publ), 164 83 Stockholm (SE)
(72) Inventor: WOOD, Nicholas, Belfast BT9 5FT (GB)
(74) Representative: Vejgaard, Christian
(86) International application number: PCT/SE2000/000633
(87) International publication number: WO 2000/060816

(56) References cited:
- WO-A-95/20300
- WO-A-98/09460
- WO-A-98/15143
- WO-A-98/23123
- WO-A-99/08392
- US-A- 5 537 610

## Description

### Field of the invention

The present invention relates to a packet data wireless network and a method for performing routing in such a network as well as individual base stations in such a network.

### Background of the invention

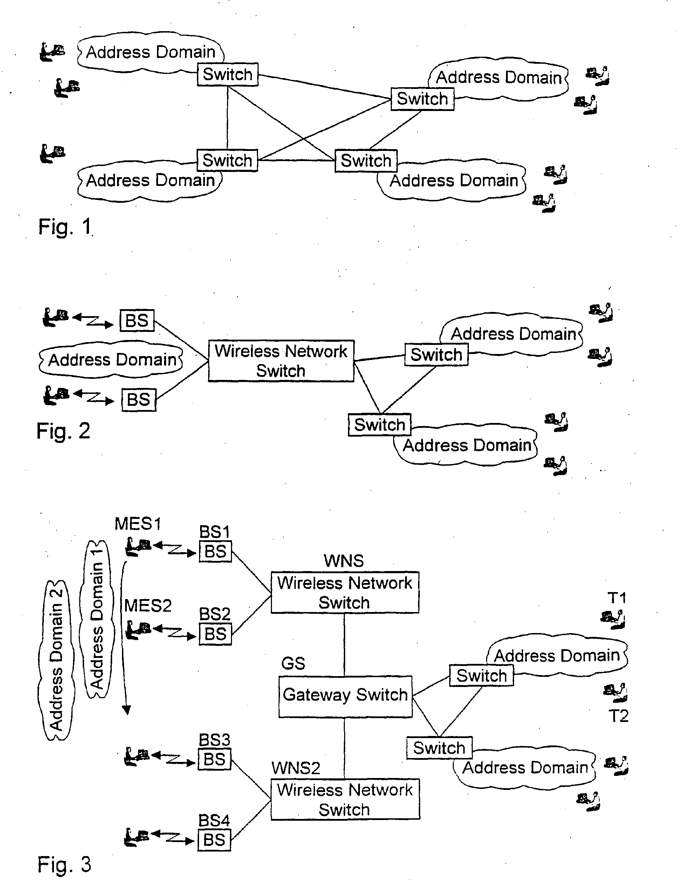

Known packet data networks are normally designed according to the generic structure outlined in Fig.1. The Internet is one example of such a network structure.

Fig. 1 shows a number of switches being interconnected by means of a suitable transmission means, such as a grid of cable connections, and a number of terminals being physically connected to each respective switch.

The terminals are assigned addresses from a common address space. This address space is divided into domains and each domain is handled by a respective switch. A terminal is associated with the address domain handled by its switch. This configuration is static in the sense that a particular address domain remains being handled by the same switch and that terminals remain being connected to the same switch.

The purpose of the network is to allow messages to be routed between terminals in different domains. To accomplish this, each switch has knowledge on which respective switch to address for a particular address domain.

The above structure works well for static terminals, such as terminals placed at an office. When a terminal is mobile in the sense that it changes its physical location frequently, e.g. a taxi dispatch terminal in a car or a computer used by a travelling salesman, the network structure must be adapted to this situation.

There are two main approaches for dealing with the problem of handling mobile terminals. One approach is simply to introduce a remote connection between the terminal and the switch. This solution typically involves a modem connection using some telecom network which may be wireless, i.e. a circuit switched solution.

Another approach is to use a wireless packet data network. This is the problem area of the present invention.

One simple form of a wireless packet data network is shown in fig. 2. In this network, one or more radio base stations are introduced between a switch and respective terminals for providing wireless connectivity. The switch itself is replaced by a wireless network switch.

As seen from other switches, the wireless network switch is still responsible for a fixed address domain, i.e. all terminals in the wireless network must be assigned addresses from the domain handled by the switch. Routing between the different switches is done in the same way as in the static network.

The static connections between the terminals and the wireless switch are replaced by a wireless network, which is dynamic in the sense that the physical location of a terminal and thus its network access point (base station) may change. In order to keep track of the changes, mobility management protocols are introduced between the terminal and the wireless network switch. The mobility management protocols enable the particular wireless network switch to know which access point to use for a specific terminal.

Routing between the wireless network switch and the terminals is performed by tunnelling messages through the wireless network. The purpose of the tunnel is to "hide" the mobility of the mobile terminal, whereby users only "see" a static connection, i.e. the fixed end-point of the tunnel when communicating with a mobile end station. In this way, it is ensured that applications (program options/ network features) used in the static network can also be used in the wireless network.

In principle, this solution would appear to be adequate. In real life however, the number of base stations and thus the geographical coverage of the wireless network is limited by factors such as switch capacity and geographical distribution of base stations.

The simplest way to solve these problems is to introduce several wireless network switches, each handling its own set of base stations. However, since each address domain can only be handled by one switch as seen from the other switches, terminals can only move between base stations belonging to the same switch and not to base stations belonging to another switch.

In order to let terminals move freely between base stations and independent of the switch configuration, the solution shown in fig. 3 may be applied.

In this example, a gateway switch, GS, is introduced between the static network and the wireless network switches, WNS1 and WNS2.

According to this example, the wireless network switches are no longer linked to specific address domains. Terminals with addresses from any domain handled by the gateway switch may use access points belonging to any wireless network switch connected to the gateway switch.

Seen from the static network, the gateway switch handles all domains belonging to the wireless network. Special mobility management procedures are used between the gateway switch and the wireless network switches to allow the gateway switch to route incoming messages to the particular network switch, which is currently used as an access point by the destination terminal.

Routing between the gateway switch and the terminals is done by tunnelling messages via the wireless network in the same way as in the simple solution discussed earlier. The tunnel is kept between the terminal and the gateway switch since the gateway switch is the only static point in the network. Therefore, both incoming and outgoing traffic must pass through the gateway switch.

With reference to fig. 3, the procedure for handling the registration of a mobile end station and for handling the subsequent handover of such a mobile end station to another base station shall be explained by way of example.

When a mobile end station MES1 is seeking to be registered for connection with base station BS1 the following events take place:

Router tables are established in wireless network switch WNS1 and in gateway switch GS so that
- GS routes messages intended for MES1 to WNS1.

Now MES1 moves to an area associated with BS3 and seeks to be connected with BS3, which is connected to wireless network switch WNS2.

If MES1 is accepted by BS3, the router tables defined at WNS1, WNS2 and GS are changed so that
- GS routes messages intended for MES1 to WNS2,
- WNS2 routes messages intended for MES1 to BS3.

This changed configuration of router tables at the various units involved is accomplished by transmitting the corresponding information on the network.

It is seen that whenever a mobile end station moves between base stations belonging to different wireless network switches, the wireless network switches involved have to exchange state information for the mobile end station. For example, buffered down-link messages or state data, related to the communication links, are send between the mobile end station and the wireless network switch.

In order to reduce the load on the gateway switch it is possible to extend the structure further. This is typically accomplished by introducing more than one gateway switch, each handling a unique part of the domains used in the wireless network and each terminating tunnels from terminals belonging to its own domain. The wireless network switches must then know which gateway switch to address for each terminal; a problem that may be solved in an arbitrarily complex way. This is not discussed further here, since the invention proposes a simpler solution to the problem.

The gateway switch used in current art is the key to the above solution, but at the same time, it is its greatest weakness, because it introduces yet another level of switches and increases the system complexity. Moreover, the mobility management protocols become complex, especially in the case with multiple gateway switches.

Prior art document WO98/09460 discloses a network comprising a packet routing entity being coupled to a plurality of base station controllers and a plurality of base station transceiver subsystems, which are providing wireless access to mobile end stations. The packet routing entity is capable of passing packets between a first one of the plurality of base station transceivers and each of the plurality of base station controllers enabling the network to perform soft handover. The preamble of claim 1 reflects this document.

Prior art document WO98/23123 shows a method of transmitting signals between a roaming mobile end station, a serving base station subsystem, a visited mobile switching centre, a foreign public switched telephone network, an international trunk link, a home public switched telephone network, and a home mobile switching centre. A home location register in the home mobile switching centre is informed about the mobile end stations location and the identity of the new base station subsystem currently serving the mobile end station.

### Summary of the invention

One object of the present invention is to set forth a packet data network, which provides for a reduced amount of information being send on the network, in case a mobile end station changes base station. This object has been achieved by the subject matter defined by independent claim 1.

Another object is to achieve a routing procedure, which incorporates simplified mobility management procedures.

This object has been achieved by the subject matter according to claim 6.

As an alternative to the routing procedure set out in claim 6 dependent claim 7 specifies a modified procedure enabling a wireless network switch to adopt an off duty state.

According to independent claim 9 there has been defined a switching base station, adapted for switching between a number of wireless network switches in dependency of the particular mobile end station with which communication is performed.

The network structure of the present invention is simpler than the prior art network structures. Consequently, much of the complexity associated with the prior art gateway switches has been avoided. A less complex structure is easier to both implement and maintain, resulting in both lower cost and higher performance. The packet data network according to the invention avoids complex mobility management procedures, and supports multiple switches in the wireless network.

Moreover, the packet data network according to the invention can easily be extended, or reduced for that matter, at any stage in the development of a network. This scalability is particular advantageous since network operators often have difficulties in forecasting capacity demand.

Further advantages will appear from the further dependent claims and following detailed description of the invention.

### Brief description of the figures

Fig. 1 shows the generic structure of a known stationary packet data network,
Fig. 2 shows a known packet data network providing wireless access,
Fig. 3 shows another known packet data network providing wireless access,
Fig. 4 is schematic illustration of the packet data network according to the present invention,
Fig. 5 shows a preferred embodiment of the base station according to the invention, and
Fig. 6 shows a preferred embodiment for the wireless network switch according to the invention.

### Detailed description of a preferred embodiment of the invention

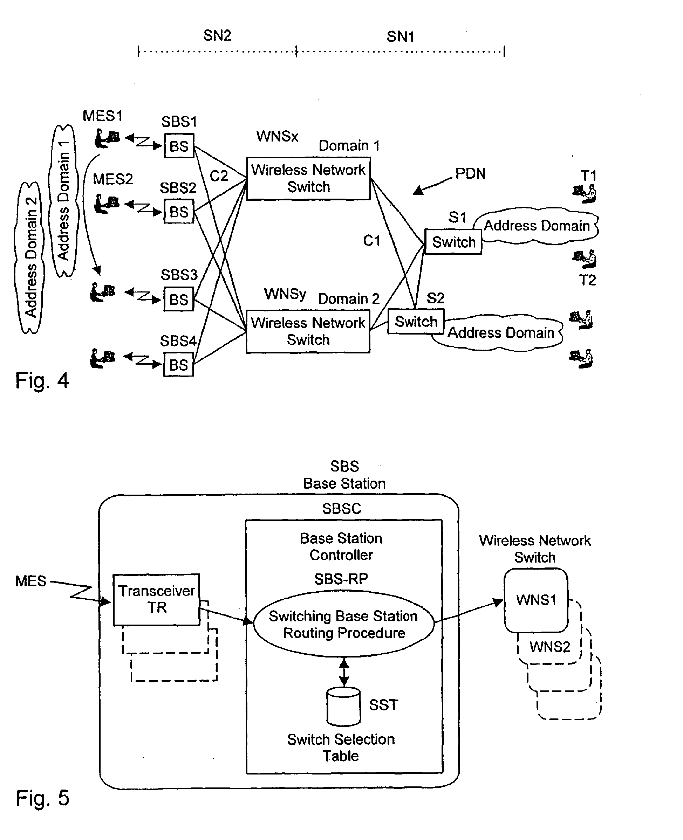

The proposed packet data network according to the invention, which has been outlined in fig. 4, comprises at least two sub-networks, SN1 and SN2. The former is mainly directed towards providing connections to fixed terminals, whereas the latter is directed towards providing connections to mobile end stations.

The first sub-network, SN1, comprises a number of switches S1 and S2, a number of wireless network switches, WNSx and WNSy and first transmission means C1 for transmitting messages therebetween. The switches S1 and S2 are connected to the static terminals T1 and T2.

The second sub-network, SN2, comprises the same wireless network switches WNSx and WNSy. The wireless network switches, WNSx and WNSy constitute the links between the first and the second sub-network, SN1 and SN2. The second sub-network moreover comprises a number of base stations SBS1 - SBS4 and second transmission means, C2, for transmitting messages therebetween. The base stations, SBS1 - SBS4, are being adapted to be coupled to mobile end stations MES1 and MES2. As indicated in fig. 4, a given message from any of the base stations SBS1 to SBS4 to any of the switches S1 and S2 and vice versa can be transmitted through any of the wireless switches WNSx or WNSy.

By way of example, only a limited number of elements - denoting the various switches, base stations and terminals - have been indicated in the example on fig. 4. However, the invention is not restricted to comprising only a limited number of elements. In fact, the invention is particular advantageous for network implementations comprising for instance several wireless network switches, hundreds of base stations and thousands of terminals.

It should be understood that the first and second transmission means C1 and C2 shown in fig. 4 could represent any suitable connection medium for instance cables or equipment involving that the air interface is used for radio communication such as microwave links. It should also be understood that the transmission means, which has been shown as a star network could be formed as a ring network or any other suitable configuration of network. Hence, the connections shown in fig. 4 could also represent communication channels. The transmission means C1 enables communication to take place between any switch and any wireless network switch. Likewise, the transmission means C2 enables communication to take place between any base station BS and any wireless network switch WNS.

The respective base stations SBS1 - SBS4 according to the invention are adapted to switch between, or direct their communication to any of the wireless network switches WNSx and WNSy, in the packet data network PDN.

In the preferred embodiment, the wireless network covers two address domains, AD1 and AD2. For performance reasons, these domains have been divided between two wireless network switches. As indicated by the cloud-like areas in figure 3, the address domains are not associated with a fixed group of local base stations. Fig. 3 reflects that the address for a particular mobile end station is associated with a particular wireless network switch.

To allow a mobile end terminal MES from one address domain to move freely between different base stations; the base stations are no longer tied to a specific switch. Instead, functionality is added to the base stations in such a manner that the base stations will choose a particular wireless network switch which has been assigned to the mobile end terminal in question. Hence, a central gateway switch, holding global information on address domains is avoided.

Traffic from the static network is routed to the wireless network switch WNS handling the domain of the destination terminal. From here, the message is tunnelled directly via the currently visited base station to the terminal, instead of first being routed via yet another level of switches. The tunnel is established between the terminal and the wireless network switch handling the domain of the terminal.

The mobility management procedures are modified as compared with the prior art system described under fig. 3 in such a way that each base station knows which switch terminates the tunnel for each visiting terminal. The configuration of the individual base stations will be described later.

In the following, the mobility management procedures according to the invention shall be described by means of an example relating to the initial registration of a mobile end station and the subsequent handover of a mobile end station from one base station to another.

When a mobile end station MES1 is seeking to be registered for connection with base station SBS1 the following steps are performed:

Depending on the actual configuration, WNSx is allocated to SBS1, that is, SBS1 channels communication through WNSx.

A router table is established in WNSx so that
- WNSx routes messages intended for MES1 to SBS1.

Now MES1 moves to an area associated with SBS3 and seeks to be connected with SBS3.

If accepted by SBS3, the router table at WNSx is changed such that
- WNSx routes messages intended for MES1 to SBS3.

It is noted that WNSy is unaffected by the change of location of MES1 from SBS1 to SBS3. No messages concerning changes in router tables at WNSx or WNSy are exchanged on the network.

It is also noted that the above routing, depending on the configuration chosen could take place by means of WNSy instead of WNSx.

We shall now turn to the details regarding the switching base station SBS and the wireless network switch WNS.

The proposed solution is applicable to many different types of settings. One implementation of the switching base station has been shown in fig. 5.

The switching base station, SBS, corresponds in many respects to standard radio base stations for e.g. Mobitex ® or GPRS (General Packet Radio System), capable of transmitting wireless packet data messages to and from a mobile end station.

According to the preferred embodiment of the invention shown in fig. 5, the switching base station SBS comprises one or more transceivers TR, handling the radio link between the switching base station SBS and mobile end stations MES, and a base station controller SBSC handling communications with the respective wireless network switches WNS.

However, in contrast to the standard equipment used in the art and as explained above, the base station is modified so that it is capable of forwarding traffic to any selected wireless network switch instead of just one fixed switch. This forwarding functionality is in general implemented in such a way, that traffic to a particular mobile end station MES is always routed to the same wireless network switch WNS independently of which switching base station SBS received the traffic.

The routing procedures are implemented in the base station controller together with a switch selection table SST. The switching base station routing procedure SBS-RP uses the switch selection table SST to decide which wireless network switch WNS to use for a particular mobile end station MES. The information in the switch selection table SST is generally static, i.e. it does not change as mobile end stations MES register or move around, and is provided through configuration of the switching base station SBS.

In the present embodiment, the switch selection table SST is adapted to be updated or reconfigured at regular intervals, e.g. at a number of hours. The switch selection table contains a list of all mobile end stations, which are assigned to the packet data network PDN in question. Switch selection tables exist in all switching base stations. Switch selection table functionality (not shown) in the base stations and in the wireless network switches ensure that changes to the switch selection tables held in the base stations are rendered identical with one another.

The switch selection table SST is also modified when a mobile end station is visiting a base station in the network for the first time. In this case, it is established which wireless network switch should be assigned to the mobile end station and the other base stations in the network are modified accordingly. In practice, the switch selection table could comprise different tables, such as a core table comprising all home network users and a visitor's table, comprising visiting mobile end stations. The visiting table or alternatively its modifications would typically be small in comparison with the core table or its modifications and would therefore be adapted for being communicated on the network to the other base stations. Another possibility is to assign all visiting mobiles to a predetermined wireless network switch.

In any case, the switching base stations are adapted to - for a large proportion of the time - hold identical switch selection tables SST indicative of which particular wireless network switch WNS should be addressed in order to address a particular mobile end station MES.

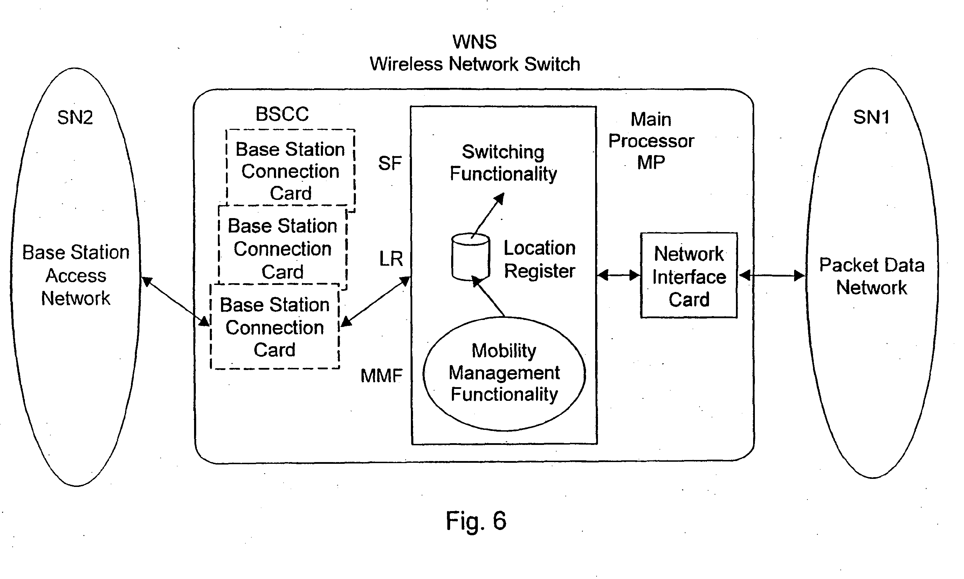

The wireless network switch, WNS, may be implemented on a standard router, a standard computer like a PC or a SUN ® workstation, or on a wireless network switch known from prior art solutions. A preferred example using a standard computer is shown in fig. 6.

The computer based wireless network switch WNS shown in fig. 6 comprises one or more network interface cards NIC for access to sub-network SN1, e.g. an external packet data network like the internet, and one or more base station connection cards BSCC for access to the second sub-network SN2. The latter sub-network connecting to the switching base stations SBS could be based on using T1 connections, X.25, IP backbone or some other appropriate access technology.

The wireless network switch WNS comprises moreover a central processor MP, which implements all switching functionality as well as mobility management for each mobile end station MES. The functionality of the main processor MP comprises switching functionality SF, mobility management functionality MMF and a location register LR.

The switching functionality SF enables data being transferred from any network interface card NIC to any base-station connection card BSCC in dependency of the content of the location register LR.

When a mobile end station MES registers or moves in the wireless network, the wireless network switch WNS assigned to the mobile end station MES in question is notified by any of the switching base stations SBS involved in the change about which current base station the mobile end station is coupled to. The mobility management functionality MMF effects that the local register LR in the wireless network switch WNS contains the current routing list for which switching base stations SBS to address in order to reach a given mobile end station.

The location register LR is then updated with the current location, i.e. to which switching base station the mobile end station MES is assigned.

Traffic received from the first sub-network SN1 is routed by the switching functionality SF to the mobile end station MES via the currently visited switching base station. The location register LR is used to determine which switching base station to use. Traffic received from a switching base station SBS is routed directly to the first sub-network SN1 by the switching functionality SF.

As described above the packet data network according to the present invention generally works in such a way that messages from mobile end stations MES are routed through fixedly assigned wireless network switches WNS.

However, a suspension procedure may optionally be implemented in the network such that if a wireless network switch WNS is temporarily adopting an off duty state, the base stations may use the remaining wireless network switches WNS for routing. This procedure could be used if a wireless network switch encounters a fail state.

In order to suspend a wireless network switch from service, the switch selection tables SST in the switching base stations SBS are changed. In this respect, all mobile end stations, which are assigned to a given wireless network switch WNS are assigned to another wireless network switch or other wireless network switches WNS. The changes in the switch selection tables SST can be effected in the same manner by which normal configuration of the switch selection tables take place. Changes are also made in the routing for the first sub-network SN1 relating to the switches for the fixed terminals T.

During the suspension, the wireless network switch WNS can be serviced or replaced.

It should be noted that the decrease in efficiency would be comparable to the amount of traffic passing through the suspended wireless network switch before being taken out of service in relation to the total amount of traffic in the network. Hence, the decrease in capacity of the overall network is marginal if a large number of wireless network switches are provided.

The above substitution of traffic also allows that particular communication paths relating to the transmission means C1 and C2 for the particular wireless network switch WNS to be taken out of service.

It should also be noted that even if no suspension procedures are provided, the network according to the invention is inherently robust because a breakdown of a single wireless network switch would only affect the corresponding portion of the complete network.

The redundancies of the network described above makes it possible to achieve very low outage values for the network. A factor of key interest for both network manufacturer, network provider and end-user.

Moreover, as explained above, considerable reductions in internal communication of data has been achieved leading to greater efficiency and greater capacity of the network.

List of reference signs
- PDN: Packet data network
- SN1: sub-network 1
- SN2: sub-network 2
- AD: address domain
- MES: mobile end station
- T: fixed terminal
- BS: base station
- GS: gateway switch
- SBS: switching base station
- TR: transceiver
- SBSC: switching base station controller
- SBS-RP: switching base station routing procedure
- SST: switch selection table
- WNS: wireless network switch
- S: switch
- MP: main processor
- NIC: network interface card
- BSCC: base station connection card
- SF: switching functionality
- LR: location register
- MMF: mobility management functionality

## Claims

1. Packet data network (PDN) comprising
a first sub-network (SN1) comprising a number of switches (S1, S2), at least two wireless network switches (WNSx, WNSy) and first transmission means (C1) for transmitting messages therebetween, the switches (S1, S2) being connected to static terminals (T1, T2),
a second sub-network comprising the at least two wireless network switches (WNSx, WNSy), a number of base stations (SBS1, ..., SBS4) and second transmission means (C2) for transmitting messages therebetween, the base stations (SBS1, .., SBS4) being adapted to be coupled and for communicating wirelessly, with a number of mobile end stations (MES1, MES2) in a given area, whereby
the at least two wireless network switches (WNSx, WNSy) constitute the links between the first and the second sub-network (SN1, SN2) and whereby a given message which is to be communicated between any base (SBS1-SBS4) station and any switch (S1, S2) can be transmitted through any of the at least two wireless switches (WNSX, WNSY), **characterised in that**
each respective base station in the second sub-network comprises a switching base station controller (SBSC) for communicating with the at least two-wireless network switches (WNS), the respective base station being adapted to switch between any of at least two wireless network switches (WNSx, WNSy).
the switching base station controller being adapted to_selectively communicates with a predetermined wireless network switch (WNS) in dependency of the particular mobile end station (MES) with which communication is performed, such that communication to a particular mobile end station (MES1, MES2) are adapted to remain being routed through the same wireless network switch (WNSx, WNSy) during handover of a mobile end station between any two base stations (SBS1, ..., SBS4), and wherein
the base stations (SBS) for a large proportion of the time, are adapted to_hold identical switch selection tables (SST) indicative of which particular wireless network switch (WNS) should be addressed in order to address a particular mobile end station (MES), where the switch selection tables (SST) are adapted to be updated or reconfigured at regular intervals,
wherein each wireless network switch (WNS) is adapted to hold a location register (LR) concerning those mobile end stations (MES) for which the particular wireless network switch (WNS) has been assigned, the location register (LR) being indicative of which base stations (SBS) the mobile end stations (MES) are currently connected to.

2. Packet data network according to claim 1 - 3, wherein when a mobile end station (MES) is visiting a base station (SBS) in the network for the first time, it is established which wireless network switch (WNS) should be assigned to the mobile end station.

3. Packet data network according to claim 2 or 3, wherein a given switch selection table (SST) contains a list of all mobile stations, which are assigned to the packet data network.

4. Packet data network according to claim 1 - 3, wherein a given switching base station (SBS) comprises one or more transceivers (TR) handling the radio link between a switching base station and mobile end stations.

5. Packet data network according to claim 1 - 4, wherein a given switch selection table (SST) is generally static, so that the switch selection table does not change as mobile end stations register for base stations or move around.

6. Packet data network defined in claim 1, whereby priority is given to a routing pattern in which communication to a particular mobile end station (MES1, MES2) are adapted to remain being routed through the same wireless network switch (WNSx, WNSy) during handover of a mobile end station between any two base stations (SBS1, ..., SBS4), and wherein
optionally communication is routed through another wireless network switch (WNSx, WNSy) during handover, for instance as a result of an off duty state is being adopted for the wireless network switch through which the communication is meant to be channelled.

7. Packet data network according to claim 6, whereby the optional routing of communication through another wireless network switch (WNSx, WNSy) is performed according to a fail state situation.

8. Base station (SBS) in a packet data network, said packet data network comprising a first sub-network (SN1) comprising a number of switches (S1, S2), at least two wireless network switches (WNSx, WNSy) and first transmission means (C1) for transmitting messages therebetween, the switches (S1, S2) being connected to static terminals (T1, T2),
a second sub-network comprising the at least two_wireless network switches (WNSx, WNSy), a number of base stations (SBS1, ..., SBS4) and second transmission means (C2) for transmitting messages there between, the base stations (SBS1, .., SBS4) being adapted to be coupled and for communicating wirelessly, with a number of mobile end stations (MES1, MES2) in a given area, whereby
the wireless network switches (WNSx, WNSy) constitute the links between the first and the second sub-network (SN1, SN2) and whereby a given message which is to be communicated between any base (SBS1-SBS4) station and any switch (S1, S2) can be transmitted through any of the wireless switches (WNSX, WNSY),
wherein each wireless network switch (WNS) holds a location register (LR) concerning those mobile end stations (MES) for which the particular wireless network switch (WNS) has been assigned, the location register (LR) being indicative of which base stations (SBS) the mobile end stations (MES) are currently connected to
**characterised in that**
the base station comprises a switching base station controller (SBSC) for communicating with a plurality of wireless network switches (WNS), the base station being adapted to switch between any of the at least two_wireless network switches (WNSx, WNSy),
the switching base station controller being adapted to_selectively communicates with a predetermined wireless network switch (WNS) in dependency of the particular mobile end station (MES) with which communication is performed, such that communication to a particular mobile end station (MES1, MES2) is adapted to remain being routed through the same wireless network switch (WNSx, WNSy) during handover of a mobile end station between any two base stations (SBS1, ..., SBS4), and wherein
the base stations (SBS) for a large proportion of the time, being adapted to hold a switch selection table (SST) which is identical to switch selection tables (SST) of other bases stations in the packet data network, the switch selection table being indicative of which particular wireless network switch (WNS) should be addressed in order to address a particular mobile end station (MES), where the switch selection tables (SST) is adapted to be updated or reconfigured at regular intervals.

9. Base station according to claim, wherein the base station controller is adapted to carry out a switching base station routing procedure (SBS-RP) for selecting the predetermined wireless network switch in dependency on a switch selection table (SST) containing information on to which particular wireless network switch (WNS) a particular mobile end station (MES) is supposed to communicate.

## Patentansprüche

1. Paketdatennetz (PDN), Folgendes umfassend:
ein erstes Subnetz (SN1), eine Anzahl von Switches (S1, S2), mindestens zwei drahtlose Netzswitches (WNSx, WNSy) und erste Übertragungsmittel (C1) umfassend, um dazwischen Nachrichten zu übertragen, wobei die Switches (S1, S2) an statische Endgeräte (T1, T2) angeschlossen sind,
ein zweites Subnetz, das die mindestens zwei drahtlosen Netzswitches (WNSx, WNSy), eine Anzahl von Basisstationen (SBS1,...,SBS4) und zweite Übertragtingsmittel (C2) umfasst, um dazwischen Nachrichten zu übertragen, wobei die Basisstationen (SBS1,...,SBS4) angepasst sind, zusammengekoppelt zu werden, und zum drahtlosen Kommunizieren mit einer Anzahl von Mobilendstationen (MES1, MES2) in einem gegebenen Bereich angepasst sind, wodurch
die mindestens zwei drahtlosen Netzswhches (WNSx, WNSy) die Verbindungen zwischen dem ersten und dem zweiten Subnetz (SN1, SN2) bilden und wodurch eine gegebene Nachricht, die zwischen einer Basistation (SBS1-SBS4) und einem Switch (S1, S2) zu kommunizieren ist, durch einen der mindestens zwei drahtlosen Switches (WNSx, WNSy) übertragen werden kann, **dadurch gekennzeichnet, dass**
jede jeweilige Basisstation im zweiten Subnetz eine Switching-Basisstationssteuerung (SBSC) zum Kommunizieren mit den mindestens zwei drahtlosen Netzswitches (WNS) umfasst, wobei die jeweilige Basisstation dazu angepasst ist, zwischen beliebigen von mindestens zwei drahtlosen Netzswitches (WNSx, WNSy) umzuschalten,
wobei die Switching-Basisstationsstcuerung dazu angepasst ist, mit einem vorhestimmten drahtlosen Netzswitch (WNS) in Abhängigkeit von der bestimmten Mobilendstation (MES) selektiv zu kommunizieren, mit der Kommunikation ausgeführt wird, sodass Kommunikation an eine bestimmte Mobilendstation (MES1, MES2) dazu angepasst ist, während eines Handovers einer Mobilendstation zwischen zwei beliebigen Basisstationen (SBS1,...,SBS4) weiterhin durch denselben drahtlosen Netzswitch (WNSx, WNSy) geroutet zu werden, und worin
die Basisstationen (SBS) für einen großen Zeitanteil dazu angepasst sind, identische Switchauswahltabellen (SST) zu unterhalten, die anzeigen, welcher bestimmte drahtlose Netzswitch (WNS) adressiert werden sollte, um eine bestimmte Mobilendstation (MES) zu adressieren, wobei die Switchauswahltabellen (SST) dazu angepasst sind, in regelmäßigen Abständen aktualisiert oder rekonfiguriert zu werden,
worin jeder drahtlose Netzswitch (WNS) dazu angepasst ist, ein Standortregister (LR) zu unterhalten, das diejenigen Mobilendstaitionen (MES) betritt, für die der bestimmte drahtlose Netzswitch (WNS) zugewiesen wurde, wobei das Standortregister (LR) anzeigt, mit welchen Basisstationen (SBS) die Mobilendstationen (MES) gegenwärtig verbunden sind.

2. Paketdatennetz nach Anspruch 1-3, worin, wenn eine Mobilendstation (MES) eine Basisstation (SBS) im Netz zum ersten Mal besucht, festgelegt ist, welcher drahtlose Netzswitch (WNS) der Mobilendstation zugewiesen werden sollte.

3. Paketdatennetz nach Anspruch 2 oder 3, worin eine gegebene Switchauswahltabelle (SST) eine Liste aller Mobilstationen enthält, die dem Paketdatennetz zugewiesen sind.

4. Paketdatennetz nach Anspruch 1-3, worin eine gegebene Swilching-Basisstation (SBS) einen oder mehrere Transceiver (TR) umfasst, die die Funkverbindung zwischen einer Switching-Basisstation und Mobilendstationen abwickeln.

5. Paketdatennetz nach Anspruch 1-4, worin eine gegebene Switchauswahltabelle (SST) im Allgemeinen statisch ist, sodass sich die Switchauswahltabelle nicht ändert, wenn sich Mobilendstationen für Basisstationen registrieren oder sich bewegen.

6. Paketdatennetz nach Anspruch 1, wodurch ein Routingmuster prioristert wird, in dem Kommunikation an eine bestimmte Mobilendstation (MES1, MES2) angepasst ist, während eines Handovers einer Mobilendstation zwischen zwei beliebigen Basisstationen (SBS1,...,SBS4) weiterhin durch denselben drahtlosen Netzswitch (WNSx, WNSy) geroutet zu werden, und worin
Kommunikation während eines Handovers optional durch einen anderen drahtlosen Netzswitch (WNSx, WNSy) geroutet wird, beispielsweise als ein Ergebnis eines dienstfreien Zustands, der für den drahtlosen Netzswitch angenommen wird, durch den die Kommunikation geleitet werden soll.

7. Paketdatennetz nach Anspruch 6, wodurch das optionale Routing von Kommunikation durch einen anderen drahtlosen Netzswitch (WNSx, WNSy) gemäß einer Fehlerzustandssituation ausgeführt wird.

8. Basisstation (SBS) in einem Paketdatennetz, wobei das Paketdatennetz eine erstes Subnetz (SN1) umfasst, das eine Anzahl von Switches (S1, S2), mindestens zwei drahtlose Netzswitches (WNSx, WNSy) und erste Übertragungsmittel (C1) umfasst, um zwischen ihnen Nachrichten zu übertragen, wobei die Switches (S1, S2) an statische Endgeräte (T1, T2) angeschlossen sind,
ein zweites Subnetz, das die mindestens zwei drahtlosen Netzswitches (WNSx, WNSy), eine Anzahl von Basisstationen (SBS1,...,SBS4) und zweite Übertragungsmittel (C2) umfasst, um zwischen ihnen Nachrichten zu übertragen, wobei die Basisstationen (SBS1,...,SBS4) angepasst sind, zusammengekoppelt zu werden, und zum drahtlosen Kommunizieren mit einer Anzahl von Mobilendstationen (MES1, MES2) in einem gegebenen Bereich angepasst sind, wodurch
die drahtlosen Netzswitches (WNSx, WNSy) die Verbindungen zwischen dem ersten und dem zweiten Subnetz (SN1, SN2) bilden und wodurch eine gegebene Nachricht, die zwischen einer Basisstation (SBS1-SBS4) und einem Switch (S1, S2) zu kommunizieren ist, durch einen der drahtlosen Switches (WNSx, WNSy) übertragen werden kann,
worin jeder drahtlose Netzswitch (WNS) ein Standortregister (LR) unterhält, das diejenigen Mobilendstationen (MES) betrifft, für die der bestimmte drahtlose Netzswitch (WNS) zugewiesen wurde, wobei das Standortregister (LR) anzeigt, mit welchen Basisstationen (SBS) die Mobilendstationen (MES) gegenwärtig verbunden sind,
**dadurch gekennzeichnet, dass**
die Basisstation eine Switching-Basisstationssteuerung (SBSC) zum Kommunizieren mit einer Vielzahl von drahtlosen Netzswitches (WNS) umfasst, wobei die Basisstation dazu angepasst ist, zwischen beliebigen der mindestens zwei drahtlosen Netzswitches (WNSx, WNSy) umzuschalten,
wobei die Switching-Basisstationssteuerung dazu angepasst ist, mit einem vorbestimmten drahtlosen Netzswitch (WNS) in Abhängigkeit von der bestimmten Mobilendstation (MES) selektiv zu kommunizieren, mit der Kommunikation ausgeführt wird, sodass Kommunikation an eine bestimmte Mobilendstation (MES1, MES2) dazu angepasst ist, während eines Handovers einer Mobilendstation zwischen zwei beliebigen Basisstationen (SBS1,...,SBS4) weiterhin durch denselben drahtlosen Netzswitch (WNSx, WNSy) geroutet zu werden, und worin
die Basisstationen (SBB) für einen großen Zeitanteil dazu angepasst sind, eine Switchauswahltabelle (SST) zu unterhalten, die mit Switchauswahltabellen (SST) auderer Basisstationen im Paketdatennetz identisch ist, wobei dieSwitchauswahltabelle anzeigt, welcher bestimmte drahtlose Netzswitch (WNS) adressiert werden sollte, um eine bestimmte Mobilendstation (MES) zu adressieren, wobei die Switchauswahltabellen (SST) dazu angepasst sind, in reglmäßigen Abständen aktualisiert oder rekonfiguriert zu werden.

9. Basisstation nach Anspruch 8, worin die Basisstationssteuerung dazu angepasst ist, eine Switching-Basissiations-Routingprozedur (SBS-RP) auszuführen, um den vorbestimmten drahtlosen Netzswitch in Abhängigkeit von einer Switchauswahltabelle (SST) auszuwählen, die Information darüber enthält, mit welchem bestimmten drahtlosen Netzswitch (WNS) eine bestimmte Mobilendstation (MES) kommunizieren soll.

## Revendications

1. Réseau de données en paquets (PDN) comprenant :
un premier sous-réseau (SN1) comprenant un nombre de commutateurs (S1, S2), au moins deux commutateurs réseau sans fil (WNSx, WNSy) et un premier moyen de transmission (C1) pour y transmettre des messages, les commutateurs (S1, S2) étant connectés à des terminaux statiques (T1, T2);
un second sous-réseau comprenant lesdits au moins deux commutateurs réseau sans fil (WNSx, WNSy), un nombre de stations de base (SBS1, ..., SBS4) et un second moyen de transmission (C2) pour y transmettre des messages, les stations de base (SBS1, .., SBS4) étant aptes à être couplées et à une communication sans fil avec un nombre de stations mobiles finales (MES1, MES2) dans une zone donnée, moyennant quoi :
lesdits au moins deux commutateurs réseau sans fil (WNSx, WNSy) constituent les liaisons entre les premier et second sous-réseaux (SN1, SN2) et moyennant quoi un message donné, lequel doit être communiqué entre une quelconque station de base (SBS1-SBS4) et un quelconque commutateur (S1, S2), peut être transmis par l'un quelconque desdits au moins deux commutateurs sans fil (WNSx, WNSy), **caractérisé en ce que :**
chaque station de base respective dans le second sous-réseau comporte un contrôleur de station de base de commutation (SBSC) pour communiquer avec lesdits au moins deux commutateurs réseau sans fil (WNS), la station de base respective étant apte à commuter entre l'un quelconque desdits au moins deux commutateurs réseau sans fil (WNSx, WNSy) ;
le contrôleur de station de base de commutation étant apte à communiquer de manière sélective avec un commutateur de réseau sans fil prédéterminé (WNS) en fonction de la station mobile finale particulière (MES) avec laquelle la communication est mise en oeuvre, de sorte que les communications vers une station mobile finale particulière (MES1, MES2) sont aptes à continuer à être acheminées par le même commutateur de réseau sans fil (WNSx , WNSy) au cours d'un transfert intercellulaire d'une station mobile finale entre l'une quelconque des deux stations de base (SBS1, ...., SBS4), et dans lequel:
les stations de base (SBS), pour une grande partie du temps, sont aptes à maintenir identiques des tables de sélection de commutateurs (SST) indiquant quel commutateur de réseau sans fil particulier (WNS) doit être utilisé en vue de répondre à une station mobile finale particulière (MES), où les tables de sélection de commutateurs (SST) sont aptes à être mises à jour ou reconfigurées à intervalles réguliers ;
dans lequel, chaque commutateur de réseau sans fil (WNS) est apte à maintenir un enregistreur de localisation (LR) concernant les stations mobiles finales (MES) pour lesquelles le commutateur de réseau sans fil particulier (WNS) a été attribué, l'enregistreur de localisation (LR) indiquant à quelles stations de base (SBS) les stations mobiles finales (MES) sont actuellement connectées.

2. Réseau de données en paquets selon l'une quelconque des revendications 1 à 3, dans lequel, lorsqu'une station mobile finale (MES) visite une station de base (SBS) dans le réseau pour la première fois, le commutateur de réseau sans fil (WNS) qui devrait être affecté à la station mobile finale est déterminé.

3. Réseau de données en paquets selon la revendication 2 ou 3, dans lequel une table de sélection de commutateurs donnée (SST) contient une liste de la totalité des stations mobiles qui sont affectées au réseau de données en paquets.

4. Réseau de données en paquets selon l'une quelconque des revendications 1 à 3, dans lequel une station de base de commutation donnée (SBS) comprend un ou plusieurs émetteurs-récepteurs (TR) prenant en charge la liaison radio entre une station de base de commutation et les stations mobiles finales.

5. Réseau de données en paquets selon l'une quelconque des revendications 1 à 4, dans lequel une table de sélection de commutateurs donnée (SST) est généralement statique, de sorte que la table de sélection de commutateur ne change pas lorsque les stations mobiles finales s'enregistrent pour les stations de base ou se déplacent.

6. Réseau de données en paquets selon la revendication 1, moyennant quoi la priorité est donnée à un modèle d'acheminement dans lequel les communications vers une station mobile finale particulière (MES1, MES2) sont aptes à continuer à être acheminées par le même commutateur de réseau sans fil (WNSx, WNSy) au cours d'un transfert intercellulaire d'une station mobile finale entre deux stations de base quelconques (SBS1, ..., SBS4), et dans lequel
la communication est optionnellement acheminée par un autre commutateur de réseau sans fil (WNSx, WNSy) au cours du transfert intercellulaire, par exemple, suite à un état hors service adopté pour le commutateur de réseau sans fil via lequel la Communication est destinée à être acheminée.

7. Réseau de données en paquets selon la revendication 6, moyennant quoi l'acheminement facultatif des communications par un autre commutateur de réseau sans fil (WNSx, WNSy) est mis en oeuvre selon une situation d'état de défaillance.

8. Station de base (SBS) dans un réseau de données en paquets, ledit réseau de données en paquets comprenant un premier sous-réseau (SN1) comprenant un nombre de commutateurs (S1, S2), au moins deux commutateurs réseau sans fil (WNSx, WNSy) et un premier moyen de transmission (C1) pour y transmettre des messages, les commutateurs (S1, S2) étant connectés à des terminaux statiques (T1, T2) ;
un second sous-réseau comprenant lesdits au moins deux commutateurs réseau sans fil (WNSx, WNSy), un nombre de stations de base (SBS1, ..., SBS4) et un second moyen de transmission (C2) pour y transmettre des messages, les stations de base (SBS1, ... SBS4) étant aptes à être couplées et à une communication sans fil avec un nombre de stations mobiles finales (MES1, MES2) dans une zone donnée, moyennant quoi ;
les commutateurs réseau sans fil (WNSx, WNSy) constituent les liaisons entre les premier et second sous-réseaux (SN1, SN2) et moyennant quoi un message donné, lequel doit être communiqué entre une quelconque station de base (SBS1 - SBS4) et un quelconque commutateur (S1, S2), peut être transmis par l'un quelconque des commutateurs sans fil (WNSX, WNSY) ;
dans lequel, chaque commutateur de réseau sans fil (WNS) maintient un enregistreur de localisation (LR) concernant les stations mobiles finales (MES) pour lesquelles le commutateur de réseau sans fil particulier (WNS) a été attribué, l'enregistreur de localisation (LR) indiquant à quelles stations de base (SBS) les stations mobiles finales (MES) sont actuellement connectées ;
**caractérisé en ce que :**
la station de base comporte un contrôleur de station de base de commutation (SBSC) pour communiquer avec une pluralité de commutateurs réseau sans fil (WNS), la station de base étant apte à commuter entre l'un quelconque desdits au moins deux commutateurs réseau sans fil (WNSx, WNSy) ;
le contrôleur de station de base de commutation étant apte à communiquer de manière sélective avec in commutateur de réseau sans fil prédéterminé (WNS) en fonction de la station mobile finale particulière (MES) avec laquelle la communication est mise en oeuvre, de sorte que les communications vers une station mobile finale particulière (MES1, MES2) sont aptes à continuer à être acheminées par le même commutateur de réseau sans fil (WNSx, WNSy) au cours d'un transfert intercellulaie d'une station mobile finale entre l'une quelconque des deux stations de base (SBS1, ...., SBS4), et dans lequel :
les stations de base (SBS), pour une grande partie du temps, sont aptes à maintenir une table de sélection de commutateurs (SST) qui est identique aux tables de sélection de commutateurs (SST) d'autres stations de base dans le réseau de données en paquets, la table de sélection de commutateurs (SST) indiquant quel commutateur de réseau sans fil particulier (WNS) doit être utilisé en vue de répondre à une station mobile finale particulière (MES), où les tables de sélection de commutateurs (SST) sont aptes à être mises à jour ou reconfigurées à intervalles réguliers.

9. Station de base selon la revendication 8, dans laquelle le contrôleur de station de base est apte à mettre en oeuvre une procédure d'acheminement de station de base de commutation (SBS-RP) pour sélectionner le commutateur de réseau sans fil prédéterminé en fonction d'une table de sélection de commutateur (SST) contenant des informations indiquant avec quel commutateur de réseau sans fil particulier (WNS) une station mobile finale particulière (MES) est supposée communiquer.
